# EUROPEAN PATENT APPLICATION

(11) **EP 2 660 023 A2**
(43) Date of publication of application: **06.11.2013**
(21) Application number: 13166380.9
(22) Date of filing: 03.05.2013
(51) Int. Cl.: B27M 1/08, B23Q 1/72, B23D 47/04, B23Q 1/01, B23Q 7/04

(54) **Method and machine for processing wood components or the like**

(30) Priority: 03.05.2012 IT BO20120241
(71) Applicant: BIESSE S.p.A., Pesaro (IT)
(72) Inventor: Bernardi, Paolo, 47841 CATTOLICA (IT)
(74) Representative: Boggio, Luigi

(57) **Abstract**

In a machine for processing wood components (2) or the like equipped with an elongated base (3), with at least one locking device (19) for locking a component (2) on the base (3), with an overhead crane (6) which is mobile along the base (3), and with a station (21) for loading and/or unloading a plurality of components (2), each component (2) is transferred between the loading and/or unloading station (21) and the locking device (19) by two pick and place devices (14, 26), which are mounted on the overhead crane (6) and in the loading and/or unloading station (21), respectively, and are moved with respective laws of motion which are identical.

## Description

The present invention relates to a method for processing wood components or the like.

In the field of processing wood components or the like, it is known to provide a machine of the type comprising an elongated base which extends in a substantially horizontal first direction; a plurality of crosspieces, which extend in a second direction transverse to the first direction, and are mobile along the base in the first direction; at least one locking device, which is mounted on each crosspiece to lock at least one component to be processed, and is mobile along the crosspiece in the second direction; and an overhead crane, which extends above the base in the second direction, is equipped with at least one operating head for processing the components, and is mobile along the base in the first direction.

Furthermore, the machine comprises a station for loading and/or unloading a plurality of components; and a pick and place device mounted on the overhead crane to transfer at least one component between the locking devices and the loading and/or unloading station.

Known machines for processing wood components or the like of the above-mentioned type have certain drawbacks mainly arising from the fact that the mentioned pick and place device is incapable of holding components, in particular panels, of large dimensions, which are thus to be transferred between the loading and/or unloading station and the locking devices by means of relatively complex and costly robotic handlers.

It is an object of the present invention to provide a method for processing wood components or the like, which is free from the above-described drawbacks and is simple and cost-effective to be implemented.

According to the present invention, a method for processing wood components or the like is provided as claimed in claims from 1 to 9.

The present invention also relates to a machine for processing wood components or the like.

According to the present invention, a machine for processing wood components or the like is provided as claimed in claims from 10 to 18.

The present invention will now be described with reference to the accompanying drawings, which illustrate a non-limiting embodiment thereof, in which:
figure 1 is a diagrammatic top view of a preferred embodiment of the machine of the present invention; and
figures 2 and 3 are two perspective diagrammatic views of the machine in figure 1, shown in two different operating positions.

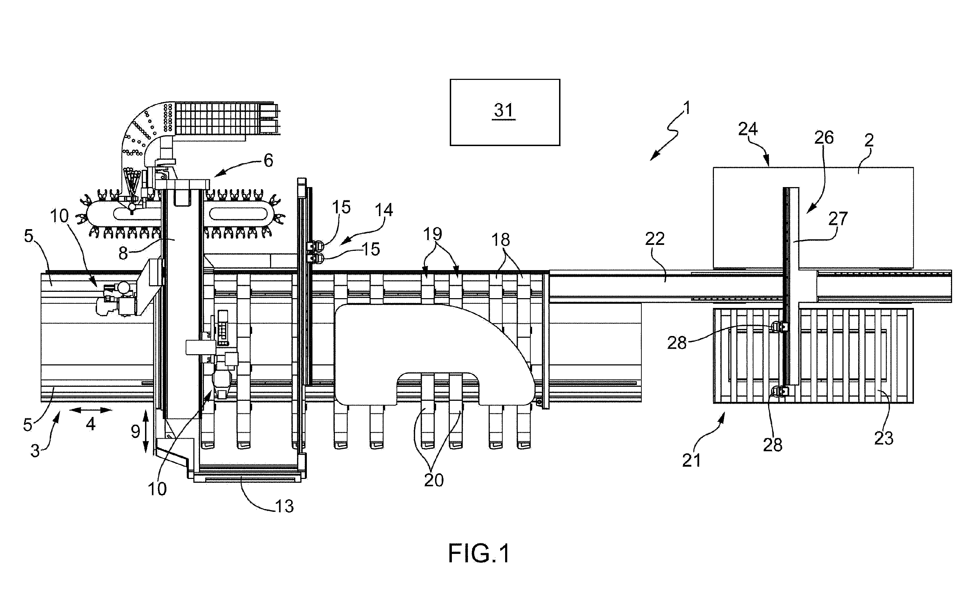

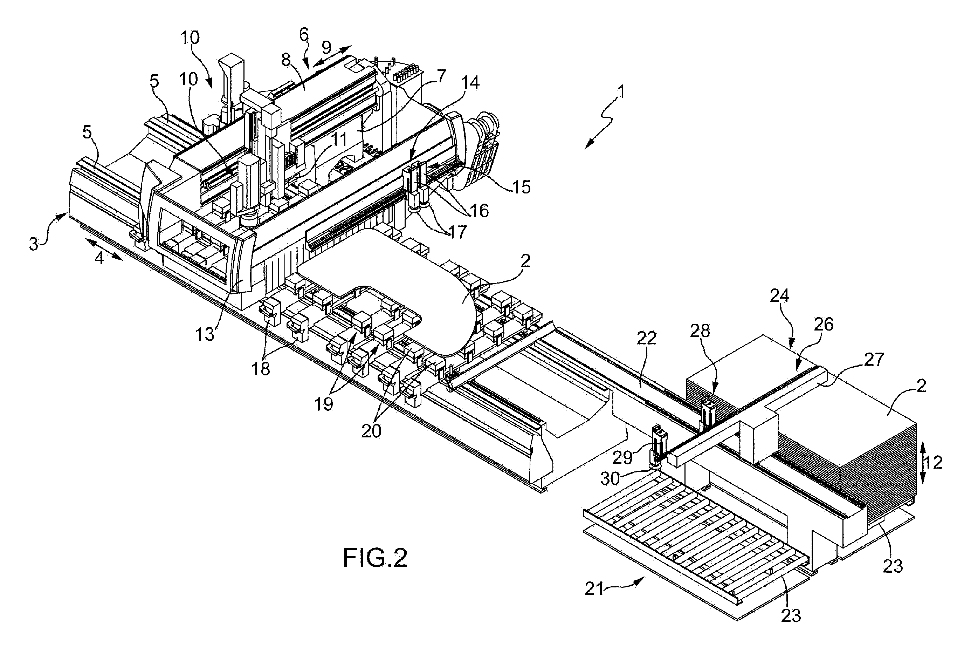

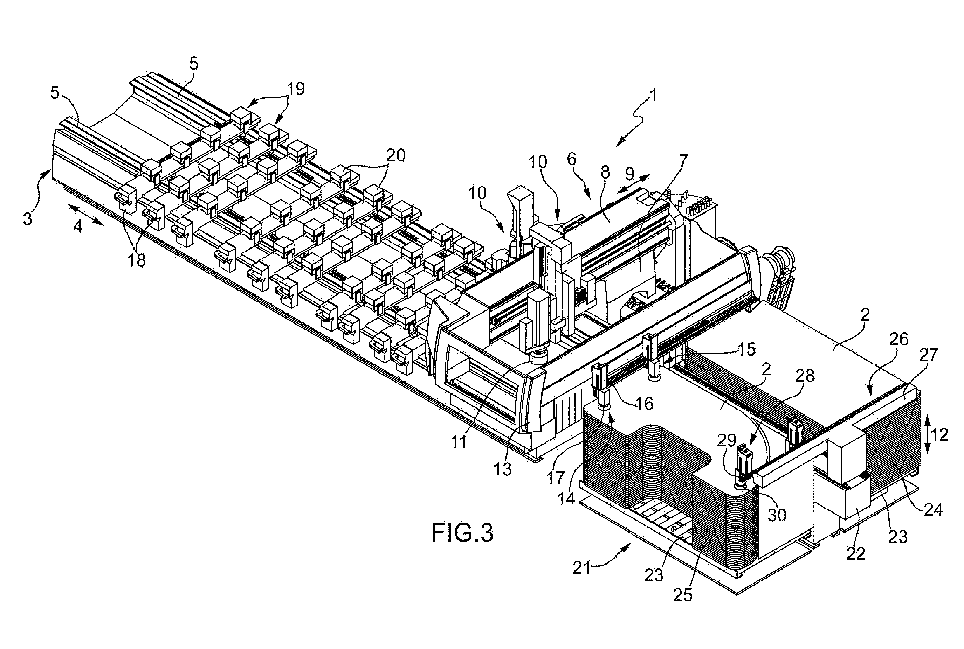

With reference to figures 1, 2 and 3, numeral 1 indicates, as a whole, a machine for processing wood components or the like defined, in this case, by panels 2 which are substantially rectangular in shape.

Machine 1 comprises an elongated base 3, which extends in a horizontal direction 4, is substantially U-shaped, and has two longitudinal guide members 5 which are parallel to direction 4.

Base 3 supports an overhead crane 6 having a vertical upright 7, which is mobile along base 3 in direction 4, and carries a crosspiece 8, which is connected to a free end of the upright 7, and extends above base 3 in a horizontal direction 9 transverse to direction 4.

Crosspiece 8 supports two operating heads 10 of known type, which are mounted on the two opposite lateral sides of crosspiece 8, are mobile along crosspiece 8 in direction 9, and are provided with respective tools and/or operator units 11 which are mobile in a vertical direction 12 orthogonal to the directions 4 and 9.

The overhead crane 6 is also equipped with a protecting guard 13, which is substantially L-shaped, is fixed to crosspiece 8 so as to extend around one of the heads 10, and supports a pick and place unit 14.

Unit 14 is mounted on an outer side of the protecting guard 13 perpendicular to direction 4, and comprises two picking devices 15, each of which has a slide 16 which is mobile along the protecting guard 13 in direction 9, and supports a sucking holding member 17 which is mobile in direction 12.

Machine 1 also comprises a plurality of crosspieces 18, hereinafter referred to as "work surfaces", which extend between the longitudinal members 5 in direction 9, and are mobile along base 3 in direction 4.

The work surfaces 18 support a plurality of locking devices 19 of known type, the arrangement of which on the related work surfaces 18 substantially depends on the dimensions of the panels 2 to be processed and on the processing operations to be carried out on panels 2.

Each device 19 comprises, in this case, a supporting block 20, which is mobile along the corresponding work surface 18 in direction 9, is coplanar to the other blocks 20, and is connected to a pneumatic sucking device of known type (not shown), for holding the panels 2 by means of suction.

Machine 1 also has, in this case, a loading and unloading station 21, which is aligned with base 3 in direction 4, faces the protecting guard 13, and comprises a guide crosspiece 22, which extends in direction 4, and projects over base 3 along one of the longitudinal members 5.

Station 21 further comprises two roller tables 23 arranged on the opposite sides of crosspiece 22 in direction 9, for receiving a stack 24 of panels 2 to be processed and a stack 25 of panels 2 that were just processed, respectively.

Crosspiece 22 supports a pick and place unit 26 comprising a supporting arm 27, which is substantially T-shaped, is mobile along the crosspiece 22 in direction 4, and extends above the tables 23 in direction 9.

Unit 26 is further provided with two picking devices 28 facing unit 14, each comprising a respective slide 29, which is mobile along crosspiece 22 in direction 9, and supports a sucking holding member 30 which is mobile in direction 12.

In use, when the panels 2 are relatively large, each panel 2 to be processed is picked from stack 24 by the two pick and place units 14, 26, is then lifted in direction 12, is fed on base 3 in the directions 4 and/or 9, and lastly is lowered onto the supporting blocks 20 in direction 12.

Once the processing operation is complete, the panel 2 that was just processed is picked from the supporting blocks 20 by the two pick and place units 14, 26, is then transferred to station 21, and lastly is released onto stack 25.

In order to ensure the proper transfer of the panels 2 between station 21 and the blocks 20, the overhead crane 6 and the arm 27 are moved in direction 4 with respective laws of motion which are identical, and the picking devices 15, 28 are moved in direction 9 with respective laws of motion which are identical, under the control of an electronic control unit 31.

Obviously, during the step of setting up the pick and place units 14, 26, both the picking devices 15 and the picking devices 28 are moved independently from each other in direction 9 as a function of the dimensions and/or the shape of panels 2.

Furthermore, it is worth noting that the pick and place units 14, 26 may move independently from each other in the directions 4 and/or 9 when they are not used to transport relatively large panels 2. For example, unit 26 may be used to pick processing scraps or parts of panel 2 while panel 2 is still being processed by machine 1.

According to an embodiment (not shown), the pick and place units 14 and/or 26 are provided with auxiliary units such as, for example, printers for labelling the panels 2.

According to another embodiment (not shown), the components are defined by elongated components for doors and windows. In this case, the supporting blocks 20 are eliminated and replaced by clamping vices, and the sucking holding members 17, 30 are eliminated and replaced by clamp holding members. The two roller tables 23 are preferably eliminated and replaced by two conveyor belts, one adapted to feed the components to be processed in sequence to the two pick and place units 14, 26, and the other to receive the components that were just processed by the pick and place units 14, 26.

## Claims

1. A method for processing wood components (2) or the like in a machine comprising an elongated base (3), which extends in a first direction (4); locking means (19) for locking at least one component (2) on the base (3); an overhead crane (6), which extends above the base (3) in a second direction (9) transverse to the first direction (4), is mobile along the base (3) in the first direction (4), and supports at least one operating head (10) for processing the components (2); and a loading and/or unloading station (21) for a plurality of components (2); the method being **characterised in that** it comprises the steps of:
taking hold of each component (2) by means of a first pick and place device (14), which is mounted on the overhead crane (6), and by means of a second pick and place device (26), which is mounted in the loading and/or unloading station (21); and
moving said first and second pick and place devices (14, 26) with respective laws of motion, which are identical to each other, so as to transfer the component (2) between the loading and/or unloading station (21) and the locking means (19).

2. A method according to claim 1, wherein:
the base (3) supports at least two crosspieces (18) extending in the second direction (9); and
the locking means (19) comprise, for each crosspiece (18), at least one respective locking device (20) mounted on the crosspiece (18) itself;
the method comprising, furthermore, the steps of:
moving the crosspieces (18) along the base (3) in the first direction (4); and
moving the locking device (20) along the relative crosspieces (18) in the second direction (9).

3. A method according to claim 1 or 2, wherein:
each component (2) is a wood panel or the like;
the locking means (19) comprise at least one supporting block (20), which is suited to hold the panel itself by means of suction; and
each one of said first and second pick and place devices (14, 26) comprises at least one sucking holding member (17, 30).

4. A method according to claim 3, wherein each panel is transferred between the loading and/or unloading station (21) and the supporting blocks (20) by lifting the panel from a stack (24) of panels to be processed and by lowering the panel on the supporting blocks (20) and/or by lifting the panel from the supporting blocks (20) and by lowering the panel on a stack (25) of panels that were just processed.

5. A method according to claim 1 or 2, wherein:
each component (2) is an elongated component for doors and windows;
the locking means (19) comprise a plurality of clamping vices for clamping the component (2) itself; and
each one of said first and second pick and place devices (14, 26) comprises at least one clamp holding member.

6. A method according to any of the previous claims, wherein said first and second pick and place devices (14, 26) are moved with respective laws of motion, which are identical to each other, in said first and/or second direction (4, 9).

7. A method according to any of the previous claims, wherein the overhead crane (6) comprises a crosspiece (8), which extends above the base (3) in the second direction (9) and is engaged in a sliding manner by the operating head (10), and a protecting guard (13), which extends around the operating head (10) itself; the first pick and place device (14) being mounted on the protecting guard (13).

8. A method according to any of the previous claims, wherein said first and second pick and place devices (14, 26) are moved with respective laws of motion, which are identical to each other, so as to transfer the components (2) to be processed from the loading and unloading station (21) to the locking means (19) and so as to transfer the components (2) that were just processed from the locking means (19) to the loading and unloading station (21).

9. A method according to any of the previous claims and comprising, furthermore, the step of:
moving said first and second pick and place devices (14, 26) with respective laws of motion, which are independent of one another, in said first and/or second direction (4, 9) during a setup step of said first and second pick and place devices (14, 26) as a function of the dimensions and/or of the shape of the components (2) and/or during a processing step of the components (2).

10. A machine for processing wood components (2) or the like comprising an elongated base (3), which extends in a first direction (4); locking means (19) for locking at least one component (2) on the base (3); an overhead crane (6), which extends above the base (3) in a second direction (9) transverse to the first direction (4), is mobile along the base (3) in the first direction (4), and supports at least one operating head (10) for processing the components (2); a first pick and place device (14), which is mounted on the overhead crane (6); and a loading and/or unloading station (21) for a plurality of components (2); and **characterised in that** it comprises, furthermore, a second pick and place device (26), which is mounted in the loading and/or unloading station (21) and cooperates with the first pick and place device (14) for taking hold of at least one component (2); and an electronic control unit (31) for moving said first and second pick and place devices (14, 26) with respective laws of motion (14, 26), which are identical to each other, and for transferring the component (2) between the loading and/or unloading station (21) and the locking means (19).

11. A machine according to claim 10, wherein the base (3) supports at least two crosspieces (18), which extend in the second direction (9) and are mobile along the base (3) itself in the first direction (4); the locking means (19) comprise, for each crosspiece (18), at least one respective locking device (20), which is mobile along the crosspiece itself (19) in the second direction (9).

12. A machine according to claim 10 or 11, wherein:
each component (2) is a wood panel or the like;
the locking means (19) comprise at least one supporting block (20), which is suited to lock the panel itself by means of suction; and
each one of said first and second pick and place devices (14, 26) comprises at least one sucking holding member (17, 30).

13. A machine according to claim 12, wherein the loading and unloading station (21) is configured so as to house a stack (24) of panels to be processed and a stack (25) of panels that were just processed.

14. A machine according to claim 10 or 11, wherein:
each component (2) is an elongated component for doors and windows;
the locking means (19) comprise a plurality of clamping vices for clamping the component (2) itself; and
each one of said first and second pick and place devices (14, 26) comprises at least one clamp holding member (17, 30).

15. A machine according to any of the claims from 10 to 14, wherein the electronic control unit (31) is configured to move said first and second pick and place devices (14, 26) with respective laws of motion, which are identical to each other, in said first and/or second direction (4, 9).

16. A machine according to any of the claims from 10 to 15, wherein the overhead crane (6) comprises a crosspiece (8), which extends above the base (3) in the second direction (9) and is engaged in a sliding manner by the operating head (10), and a protecting guard (13), which extends around the operating head (10) itself; the first pick and place device (14) being mounted on the protecting guard (13).

17. A machine according to any of the claims from 10 to 16, wherein said first and second pick and place devices (14, 26) can be moved in a third direction (12), which is substantially orthogonal to said first and second direction (4, 9).

18. A machine according to any of the claims from 10 to 17, wherein the electronic control unit (31) is configured to move said first and second pick and place devices (14, 26) with respective laws of motion, which are independent of one another, in said first and/or second direction (4, 9) during a setup step of said first and second pick and place devices (14, 26) as a function of the dimensions and/or of the shape of the components (2) and/or during a processing step of the components (2).
